# EUROPEAN PATENT APPLICATION

(11) **EP 4 723 247 A1**
(43) Date of publication of application: **08.04.2026**
(21) Application number: 25778839.8
(22) Date of filing: 28.02.2025
(51) Int. Cl.: H01M 4/62, H01M 4/58

(54) **SOLID-STATE ELECTROLYTE MATERIAL AND PREPARATION METHOD THEREFOR, POSITIVE ELECTRODE ACTIVE MATERIAL, POSITIVE ELECTRODE SHEET, SOLID-STATE BATTERY AND ELECTRIC DEVICE**

(30) Priority: 29.03.2024 CN 202410384654
(71) Applicant: Beijing Easpring Material Technology Co., Ltd., Beijing 100160 (CN)
(72) Inventor: SHAO, Zongpu, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2025/080082
(87) International publication number: WO 2025/200938

(57) **Abstract**

The present disclosure discloses provides a solid-state electrolyte material and a preparation method thereof, a cathode active material, a cathode plate, a solid-state battery, and an electrical device. The solid-state electrolyte has a NASICON crystal structure. In an X-ray diffraction pattern of the solid-state electrolyte material, the solid-state electrolyte material has a characteristic diffraction peak exhibit at a diffraction angle 20 values of 14.5 ° to 14.8 °, a characteristic diffraction peak at a diffraction angle 20 value of 19.5 ° to 19.7 °, and a characteristic diffraction peak at a diffraction angle 20 value of 22.5 °to 22.8 °. A ratio of a peak intensity I₁ of the characteristic diffraction peak at a 20 value of 14.5 °to 14.8 °to a peak intensity I₂ of the characteristic diffraction peak at a 20 value of 22.5 °to 22.8 °satisfies: 1.5≤I₂/I₁≤3. Thus, an ionic conductivity and structural stability of the solid-state electrolyte are improved.

## Description

### FIELD

The present disclosure relates to the field of batteries, and more particularly, to a solid-state electrolyte material and a preparation method thereof, a cathode active material, a cathode plate, a solid-state battery, and an electrical device.

### BACKGROUND

Range anxiety and battery safety issues have become pain points and major bottlenecks restricting the development of new energy vehicles. The key to iterative innovation of the next-generation power batteries with higher energy density and greater safety lies in the technological breakthroughs of solid-state batteries. As a core material of the solid-state battery, the comprehensive performance and industrialization progress of a solid-state electrolyte are key factors to the development of the solid-state battery. Currently, the solid-state electrolytes with industrialization prospects mainly include three major systems: a polymer, a sulfide, and an oxide. Among them, a sulfide electrolyte has a high conductivity, but their manufacturing cost is high, and there are huge challenges in large-scale production and integration into vehicles. A polymer solid-state electrolyte is easy to process, but a battery with the polymer solid-state electrolyte is prone to short circuits. An oxide solid-state electrolyte exhibits an ionic conductivity that falls between that of the polymer and the sulfide, and their preparation difficulty is moderate, which facilitates the iteration from a semi-solid-state battery, a quasi-solid-state battery, to an all-solid-state battery. However, in the related art, the oxide solid-state electrolyte faces a trade-off between enhancing the ionic conductivity and maintaining powder structural stability, which affects rate performance and cycle performance of the battery.

### SUMMARY

The present disclosure aims to solve at least one of the technical problems in the related art.

A first aspect of the present disclosure provides a solid-state electrolyte material. The solid-state electrolyte material has a Na Super Ionic Conductor, NASICON, crystal structure. In an X-ray diffraction pattern of the solid-state electrolyte material, the solid-state electrolyte material has a characteristic diffraction peak at a diffraction angle 20 value of 14.5° to 14.8°, a characteristic diffraction peak at a diffraction angle 20 value of 19.5° to 19.7°, and a characteristic diffraction peak at a diffraction angle 20 value of 22.5° to 22.8°. A ratio of a peak intensity I₁ of the characteristic diffraction peak at the 20 value of 14.5° to 14.8° to a peak intensity I₂ of the characteristic diffraction peak at the 20 value of 22.5° to 22.8° satisfies: 1.5≤I₂/I₁≤3. Thus, a composite crystal structure with both a hexagonal crystal system and a monoclinic crystal system is formed. Meanwhile, the solid-state electrolyte material contains both phosphate and pyrophosphate as a framework of the solid-state electrolyte material, which can enhance structural stability of the solid-state electrolyte material, reduce a binding to a charge carrier, and improve mobility of the charge carrier. As a result, an ionic conductivity of the solid-state electrolyte material is improved, and rate performance of the battery is enhanced.

According to some embodiments of the present disclosure, in the X-ray diffraction pattern of the solid-state electrolyte material, the solid-state electrolyte material further has a characteristic diffraction peak I₃ at a 20 value of 17.8° to 18.0° and/or 23.7° to 23.9° and/or 26.8° to 27.0°. Thus, the solid-state electrolyte material contains the phosphate ion, the pyrophosphate ion, and heteropolyacid as the framework of the solid-state electrolyte material, which can further enhance the structural stability of the solid-state electrolyte material, reduce the binding to the charge carrier, and improve the mobility of the charge carrier. As a result, the ionic conductivity of the solid-state electrolyte material is improved, and the rate performance of the battery is enhanced.

According to some embodiments of the present disclosure, a crystal plane in the X-ray diffraction pattern of the solid-state electrolyte material is preferentially oriented along <113>. A ratio of a peak intensity of a diffraction peak (113) to a peak intensity of a diffraction peak (104) satisfies: I(113)/I(104)≥2, preferably 2≤I(113)/I(104)≤4. A 20 value corresponding to the diffraction peak (113) of the X-ray diffraction pattern ranges from 24.3° to 24.6°, with a full width at half maximum ranging from 0.170 to 0.172. A 20 value corresponding to the diffraction peak (104) ranges from 20.7° to 20.9°, with a full width at half maximum ranging from 0.180 to 0.184. Thus, a content of the dominant crystal plane (113) in the solid-state electrolyte material is increased, a transport channel of the charge carrier is widened, and a transport rate of the charge carrier is improved. As a result, the ionic conductivity of the solid-state electrolyte material is improved.

According to some embodiments of the present disclosure, the solid-state electrolyte material has a charge-discharge plateau at 2.4 V to 2.6 V.

According to some embodiments of the present disclosure, the solid-state electrolyte material includes LiₓM¹_{y}M²_{z}M³ᵤ(PO₄)_{w1}(P₂O₇)_{w2}(ROᵥ)_{w3}, where: M¹ includes at least one of Mg, Na, or K, optionally, M¹ includes at least one of Mg or K; M² includes at least one of Al, Ga, In, Y, or Sc, optionally, M² includes at least one of AI or Y; M³ includes at least one of Ti, Zr, or Ge; R includes at least one of Mo, W, Si, Cl, Br, S, Sb, Sn, F, or P, optionally, R includes at least one of Si, Mo, or W; and 0<x≤5, 0≤y≤0.5, 0≤z≤1, 0≤u≤9, 0≤v≤4, 1≤w1≤3, 0<w2≤2.3, 0<w3≤3, and w1+w2+w3=3. Thus, the solid-state electrolyte material contains the phosphate ion, the pyrophosphate ion, and the heteropolyacid as the framework of the solid-state electrolyte material simultaneously, which can enhance the structural stability of the solid-state electrolyte material, reduce the binding to the charge carrier, and improve the mobility of the charge carrier. As a result, the ionic conductivity of the solid-state electrolyte material is improved, and the rate performance of the battery is enhanced.

According to some embodiments of the present disclosure, the solid-state electrolyte material satisfies at least one of the following conditions: an iron conductivity of the solid-state electrolyte material is greater than or equal to 1×10⁻³S/cm, optionally greater than or equal to 2×10⁻³S/cm; an average particle size of the solid-state electrolyte material ranges from 0.5 µm to 20 µm, optionally from 0.5 µm to 0.9 µm; a pH value of the solid-state electrolyte material ranges from 6 to 10 at 25°C; and a surface of the solid-state electrolyte material includes residual lithium, wherein the residual lithium includes at least one of dilithium hydrogen phosphate, lithium dihydrogen phosphate, lithium carbonate, or lithium pyrophosphate, wherein based on a total mass of the solid-state electrolyte material, a mass proportion of the dilithium hydrogen phosphate is a, a mass proportion of the lithium dihydrogen phosphate is b, a mass proportion of the lithium carbonate is c, and a mass proportion of the lithium pyrophosphate is d, where a, b, c and d satisfy: 0≤a≤0.5%, 0≤ b≤ 0.1%, 0≤c≤ 0.3%, and 0≤d≤0.2%.

A second aspect of the present disclosure provides a method for preparing the solid-state electrolyte material provided in the first aspect. The method includes: mixing an M² source, an M³ source, a PO₄³⁻ source, a precipitant, and a solvent, followed by co-precipitating and filtering, to obtain a first precursor; mixing the first precursor and an R source, followed by performing a first sintering in an oxygen-containing atmosphere, to obtain a second precursor; and mixing the second precursor, a Li source, an M¹ source, and a P₂O₇⁴⁻ source, followed by performing a second sintering in an oxygen-free atmosphere, to obtain the solid-state electrolyte material. Thus, the solid-state electrolyte material prepared by this method has all the characteristics and advantages of the above-described solid-state electrolyte material, which will not be reiterated here. Generally speaking, the solid-state electrolyte material prepared by this method has at least the advantages of high ionic conductivity and good structural stability.

According to some embodiments of the present disclosure, the method further includes obtaining the first precursor by: mixing the M² source, the M³ source, the PO₄³⁻ source, a surfactant, the precipitant, and the solvent, and performing co-precipitation and filtering on the mixture. Optionally, based on a total mass of the PO₄³⁻ source, a mass proportion of the surfactant is greater than or equal to 0.1%, optionally ranging from 0.1% to 1%, and further optionally ranging from 0.3% to 0.7%. Optionally, the surfactant includes at least one of polyvinyl pyrrolidone, sodium dodecylbenzene sulfonate, or sulfonate. Thus, formation energy of the first precursor produced along the dominant crystal plane is reduced, a proportion of the dominant crystal plane is increased, a diffusion rate of lithium ions is increased, and the ionic conductivity of the solid-state electrolyte material is improved.

According to some embodiments of the present disclosure, the method satisfies at least one of the following conditions: the oxygen-containing atmosphere includes oxygen or air; a temperature of the first sintering ranges from 700°C to 900°C, and a duration of the first sintering ranges from 4 hours to 10 hours; the oxygen-free atmosphere includes an inert gas or nitrogen; a temperature of the second sintering ranges from 450°C to 700°C, and a duration of the second sintering ranges from 8 hours to 20 hours; the M¹ source includes at least one of oxide containing M¹, phosphate containing M¹, sulfate containing M¹, chloride containing M¹, nitrate containing M¹, or carbonate containing M¹; the M² source includes at least one of phosphate containing M², acetate containing M², sulfate containing M², chloride containing M², nitrate containing M², or carbonate containing M²; the M³ source includes at least one of phosphate containing M³, acetate containing M³, sulfate containing M³, chloride containing M³, nitrate containing M³, or carbonate containing M³; the PO₄³⁻ source includes at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄; the Li source includes at least one of lithium carbonate, lithium hydroxide, or lithium nitrate; the P₂O₇⁴⁻ source includes at least one of H₄P₂O₇, (NH₄)₂H₂P₂O₇, Li₂H₂P₂O₇, or Li₄P₂O₇; the R source includes at least one of elemental R, oxide containing R, or hydride containing R; and the precipitant includes at least one of sodium hydroxide, sodium carbonate, or ammonia water.

A third aspect of the present disclosure provides a cathode active material including the solid-state electrolyte material provided in the first aspect of the present disclosure or the solid-state electrolyte material prepared by the method provided in the second aspect of the present disclosure. Optionally, the cathode active material includes a matrix, at least part of a surface of the matrix has a coating layer, and the coating layer includes the solid-state electrolyte material. Optionally, based on a total mass of the matrix, a mass proportion of the solid-state electrolyte material ranges from 0.05% to 1%.

A fourth aspect of the present disclosure provides a cathode plate including the cathode active material provided in the third aspect of the present disclosure.

A fifth aspect of the present disclosure provides a solid-state battery including the cathode plate provided in the fourth aspect of the present disclosure

A sixth aspect of the present disclosure provides an electrical device including the solid-state battery provided in the fifth aspect of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 illustrates a schematic flowchart of preparing a solid-state electrolyte material according to an embodiment of the present disclosure.
FIG. 2 illustrates an XRD test pattern of a solid-state electrolyte material prepared in Example 3.
FIG. 3 illustrates an XRD test pattern of a solid-state electrolyte material prepared in Example 5.
FIG. 4 illustrates an XRD test pattern of a solid-state electrolyte material prepared in Comparative Example 1.
FIG. 5 illustrates an XRD test pattern of a solid-state electrolyte material prepared in Example 2.
FIG. 6 illustrates an XRD test pattern of a solid-state electrolyte material prepared in Example 2.

### DETAILED DESCRIPTION OF THE EMBODIMENTS

Embodiments of the present disclosure are described in detail below. The embodiments described below are exemplary and are merely used to explain the present disclosure, and cannot be construed as limiting the present disclosure. The techniques or conditions without specific indication shall be those described in the literature in the field or shall be performed in accordance with the product specification. The reagents or instruments used without the indication of the manufacturers are all conventional products that can be purchased commercially.

A first aspect of the present disclosure provides a solid-state electrolyte material. The solid-state electrolyte material has a NASICON crystal structure. In an X-ray diffraction pattern of the solid-state electrolyte material, the solid-state electrolyte material has a characteristic diffraction peak at a diffraction angle 20 values of 14.5° to 14.8°, a characteristic diffraction peak at a diffraction angle 20 value of 19.5° to 19.7°, and a characteristic diffraction peak at a diffraction angle 20 value of 22.5° to 22.8°. A ratio of a peak intensity I₁ of the characteristic diffraction peak at a 2θ value of 14.5° to 14.8° to a peak intensity I₂ of the characteristic diffraction peak at a 20 value of 22.5° to 22.8° satisfies: 1.5≤I₂/I₁≤3. Thus, the structural stability and ionic conductivity of the solid-state electrolyte material are improved simultaneously, and the rate performance of the battery is improved.

The principle by which the present disclosure can achieve the above-described beneficial effects is described in detail below.

According to the solid-state electrolyte material of the present disclosure, in the X-ray diffraction pattern, the characteristic diffraction peak at the 20 value of 14.5° to 14.8° corresponds to the characteristic diffraction peak of phosphate ion, and the characteristic diffraction peak at the 20 value of 22.5° to 22.8° is a characteristic diffraction peak of pyrophosphate ion, which indicates that the solid-state electrolyte material contains both the pyrophosphate ion and the phosphate ion as a framework. To be specific, bond energy between the phosphate ion and metal elements is relatively strong. During transport of metal ions (taking lithium ions as an example), probability of phase transition in a crystal structure can be reduced, the structural stability of the solid-state electrolyte material can be improved, and precipitation of the lithium ions at locations such as the bulk phase, grain boundaries, and surface of the solid-state electrolyte material can be reduced. Bond energy between the pyrophosphate ion and the metal elements is lower than that between the phosphate ion and the metal elements. The presence of the pyrophosphate ion can weaken the binding to the lithium ions and improve the mobility of the lithium ions. As a result, a migration rate of the lithium ions is improved, the ionic conductivity of the solid-state electrolyte material is improved, and the rate performance of the battery is improved. Meanwhile, the present disclosure optimizes the contents of the phosphate ion and the pyrophosphate ion in the solid-state electrolyte material by keeping the ratio of I₂/I₁ within the above-described range, to further improve the structural stability and the ionic conductivity of the solid-state electrolyte material. On this basis, the characteristic diffraction peak at the 20 value of 19.5° to 19.7° indicates that the solid-state electrolyte material has both a hexagonal crystal system and a monoclinic crystal system simultaneously. The presence of a monoclinic crystal structure makes unit cell parameters of the solid-state electrolyte material relatively large, and binding to the lithium ions by anions is weakened during the transport, which can further improve the ionic conductivity of the solid-state electrolyte material.

In the present disclosure, an X-ray diffraction test is performed by using an automatic X-ray diffractometer for phase and crystal structure analysis, with an operating voltage of 40kV, an operating current of 250 mA, continuous scanning adopted, a scanning speed of 4°/min, a step size of 0.02°, and a scanning angle ranging from 10° to 80°.

As an example, I₂/I₁ may be 1.5, 2, 2.5, or 3, etc., or a range composed of any of the above-described numerical values.

According to some embodiments of the present disclosure, in the X-ray diffraction pattern of the solid-state electrolyte material, a characteristic diffraction peak I₃ exhibits at a 2θ value of 17.8° to 18.0° and/or 23.7° to 23.9° and/or 26.8° to 27.0°. For example, when the solid-state electrolyte material contains molybdate ion, the characteristic diffraction peak exhibits at the 2θ value of 17.8° to 18.0 °; when the solid-state electrolyte material contains tungstate ion, the characteristic diffraction peak exhibits at the 20 value of 23.7° to 23.9 °; and when the solid-state electrolyte material contains silicate ion, the characteristic diffraction peak exhibits at the 20 value of 26.8° to 27.0 °. In other words, heteropolyacid is doped at phosphate ion sites and synergizes with the framework structure with pyrophosphate ion and phosphate ion. When the phosphate ion, the pyrophosphate ion, and the heteropolyacid are present simultaneously, stability of a framework and widening of an ion channel can be better balanced. To be specific, bond energy between the pyrophosphate ion, the heteropolyacid, and the metal elements is relatively weak. Compared to the phosphate ion, the binding to the lithium ions can be weakened, and the mobility of the lithium ions can be improved. As a result, the migration rate of the lithium ions is improved, the ionic conductivity of the solid-state electrolyte material is improved, and the rate performance of the battery is improved. Compared to the phosphate ion doped with the pyrophosphate ion, better framework stability can be obtained. During the transport of the lithium ions, the probability of the phase transition in the crystal structure can be reduced, and cycle performance of the battery can be improved.

According to some embodiments of the present disclosure, a crystal plane in the X-ray diffraction pattern of the solid-state electrolyte material is preferentially oriented along <113>. A ratio of a peak intensity of a diffraction peak (113) to a peak intensity of a diffraction peak (104) satisfies: I(113)/I(104)≥2. A 20 value corresponding to the diffraction peak (113) of the X-ray diffraction pattern ranges from 24.3° to 24.6°, with a full width at half maximum ranging from 0.170 to 0.172. A 2θ value corresponding to the diffraction peak (104) ranges from 20.7° to 20.9°, with a full width at half maximum ranging from 0.180 to 0.184. Thus, by maintaining I(113)/I(104) greater than or equal to 2, a content of the 113 crystal plane can be improved, which increases transport channels for the lithium ions and improves the transport rate of the lithium ions, and thus improving the ionic conductivity of the solid-state electrolyte. In addition, when the full width at half maximum of the diffraction peak (113) and the full width at half maximum of diffraction peak (104) are within the above-described ranges, better crystallinity can be achieved, thus achieving favorable structural stability.

As an example, I(113)/I(104) may be 2, 2.5, 3, 3.5, 4, 4.5, or 5, etc., a range composed of any of the above-described numerical values. According to some embodiments of the present disclosure, 2≤I(113)/I(104)≤4.

According to some embodiments of the present disclosure, the solid-state electrolyte material has a charge-discharge plateau at 2.4 V to 2.6 V.

According to some embodiments of the present disclosure, the solid-state electrolyte material may include LiₓM¹_{y}M²_{z}M³ᵤ(PO₄)_{w1}(P₂O₇)_{w2}(ROᵥ)_{w3}, where: M¹ includes at least one of Mg, Na, or K; M² includes at least one of Al, Ga, In, Y, or Sc; M³ includes at least one of Ti, Zr, or Ge; R includes at least one of Mo, W, Si, Cl, Br, S, Sb, Sn, F, or P; and 0<x≤5, 0≤y≤0.5, 0≤z≤1, 0≤u≤9, 0≤v≤4, 1≤w1≤3, 0<w2≤3, 0<w3≤3, and w1+w2+w3=3. Thus, when the solid-state electrolyte material simultaneously uses the phosphate ion, the pyrophosphate ion, and the heteropolyacid as the framework of the solid-state electrolyte material, the bond energy between the phosphate ion and the metal elements is relatively strong. During the transport of the lithium ions, the probability of the phase transition in the crystal structure can be reduced, the structural stability of the solid-state electrolyte material can be improved, and the precipitation of the lithium ions at the locations such as the bulk phase, the grain boundaries, and the surface of the solid-state electrolyte material can be reduced. Meanwhile, the pyrophosphate ion and the heteropolyacid are used to replace part of the phosphate ion as the framework. Since the bond energy between the pyrophosphate ion, the heteropolyacid, and the metal elements is lower than that between the phosphate ion and the metal elements, the binding to the lithium ions can be weakened, and the mobility of the lithium ions can be improved. As a result, the migration rate of the lithium ions is improved, and the ionic conductivity of the solid-state electrolyte material is improved. The solid-state electrolyte material has both the hexagonal crystal system and the monoclinic crystal system. The presence of the monoclinic crystal structure makes the unit cell parameters of the solid-state electrolyte material relatively large, and the binding to the lithium ions by anions is weakened during the transport, which can further improve the ionic conductivity of the solid-state electrolyte material. In addition, in the present disclosure, upon doping M² at a transition metal site (M³) and M¹ at a lithium site of the solid electrolyte material, based on a change in valence of M² compared to that of M³, and a change in valence of M¹ compared to that of the lithium ions, a content of Li in a unit cell of the solid-state electrolyte material is increased to maintain electrical neutrality. Thus, the transport channels for the lithium ions are increased, and the transport rate of the lithium ions is improved. As a result, the ionic conductivity of the solid-state electrolyte is further improved, and the rate performance of the battery is improved.

As an example, 0<x≤5, for example, x may be 0.5, 1, 2, 3, 4 or 5, etc., or a range composed of any of the above-described numerical values. Thus, the content of lithium in the solid-state electrolyte material is increased, and the number of the lithium ions is increased. As a result, the transport channels for the lithium ions are increased, the transport rate of the lithium ions is improved, and the ionic conductivity of the solid-state electrolyte material is improved. According to some specific embodiments of the present disclosure, 1≤x≤4.

As an example, 0≤y≤0.5, for example, y may be 0, 0.1, 0.2, 0.3, 0.4, or 0.5, etc., or a range composed of any one of the above-described numerical values. Thus, the ionic conductivity of the solid-state electrolyte material is improved. According to some specific embodiments of the present disclosure, 0<y≤0.01.

As an example, 0≤z≤1, for example, z may be 0, 0.2, 0.4, 0.6, 0.8 or 1, etc., or a range composed of any of the above-described numerical values. Thus, upon doping M² at the transition metal site (M³) of the solid electrolyte material, based on the change in the valence of M² compared to that of M³, the content of Li in the unit cell of the solid-state electrolyte material is increased to maintain the electrical neutrality. Thus, the transport channels for the lithium ions are increased, and the transport rate of the lithium ions is improved. As a result, the ionic conductivity of the solid-state electrolyte is further improved, and the rate performance of the battery is improved. According to some specific embodiments of the present disclosure, 0.1≤z≤0.8.

As an example, 0≤u≤9, for example, u may be 0, 1, 2, 3, 4, 5, 6, 7, 8, or 9, etc., or a range composed of any of the above-described numerical values. Thus, M³ can be used as an element constituting a framework structure of the solid-state electrolyte material. By synergistically doping with heterovalent elements M¹ and M², concentration of a charge carrier is increased, transport sites of the charge carrier are increased, and mobility of the charge carrier is improved. As a result, an intrinsic ionic conductivity of the solid-state electrolyte material is improved. According to some specific embodiments of the present disclosure, 1≤u≤3.

As an example, 0≤v≤4, for example, v may be 0, 1, 2, 3, or 4, etc., or a range composed of any of the above-described numerical values. According to some specific embodiments of the present disclosure, 0<v<4.

As an example, 1≤w1≤3, for example, w1 may be 1, 1.5, 2, 2.5, or 3, etc., or a range composed of any of the above-described numerical values. Thus, the phosphate ion serves as the framework of the solid-state electrolyte material. Since the bond energy between the phosphate ion and the metal elements is relatively strong, the binding to the metal elements can be enhanced, the probability of the phase transition in the crystal structure can be reduced during the transport of the lithium ions, and the structural stability of the solid-state electrolyte material can be improved, enabling the solid-state electrolyte material to maintain low lithium precipitation at the locations such as the bulk phase, the grain boundary, and the surface of the solid-state electrolyte material.

As an example, 0<w2≤2.3, for example, w2 may be 0.5, 1, 1.5, 2, or 2.3 etc., or a range composed of any of the above-described numerical values. Thus, the pyrophosphate ion is used to replace part of the phosphate ion as the framework of the solid-state electrolyte material, since the bond energy between the pyrophosphate ion and the metal elements is weaker than that between the phosphate ion and the metal elements, the binding to the charge carrier can be reduced, the transport barrier of the charge barrier can be reduced, and the transport rate of the charge carrier can be improved. As a result, the ionic conductivity of the solid-state electrolyte material is improved. Meanwhile, by doping M² and M³ into the solid-state electrolyte material, the structural stability of the solid-state electrolyte material can be improved, and the probability of the phase transition in the solid-state electrolyte material can be reduced. According to some specific embodiments of the present disclosure, 0.1<w2≤1.

As an example, 0<w3≤3, for example, w3 may be 0.5, 1, 1.5, 2, 2.5, or 3, etc., or a range composed of any of the above-described numerical values. Thus, by using the heteropolyacid to replace part of the phosphate ion as the framework of the solid-state electrolyte material, since the bond energy between the heteropolyacid and the metal elements is weaker than that between the phosphate ion and the metal elements, the binding to the charge carrier can be reduced, the transport barrier of the charge barrier can be reduced, and the transport rate of the charge carrier can be improved. As a result, the ionic conductivity of the solid-state electrolyte material is improved. Meanwhile, by doping M² and M³ into the solid-state electrolyte material, the structural stability of the solid-state electrolyte material can be improved, and the probability of the phase transition in the solid-state electrolyte material can be reduced. According to some specific embodiments of the present disclosure, 0<w3≤1.5.

As an example, M¹ may include at least one of Mg or K.

As an example, M² may include at least one of Al or Y.

As an example, R may include at least one of Si, Mo, or W.

According to some embodiments of the present disclosure, the ionic conductivity of the solid-state electrolyte material is greater than or equal to 1×10⁻³S/cm, for example, the ionic conductivity of the solid-state electrolyte material may be 1×10⁻³S/cm, 2×10⁻³S/cm, 2.5×10⁻³S/cm, or 3×10⁻³S/cm, etc., or a range composed of any of the above-described numerical values. Thus, the lithium-ion transport rate of solid electrolyte materials is improved, and the rate performance of the battery is improved. According to some specific embodiments of the present disclosure, the ionic conductivity of the solid-state electrolyte material is greater than or equal to 2×10⁻³S/cm.

In the present disclosure, the ionic conductivity is measured by: pressing 5 mg of the solid-state electrolyte material into a sheet sample in a steel mold with a diameter of 12 mm under a pressure of 200 MPa, placing the formed sheet sample in a fixture and performing an alternating current impedance test on an electrochemical workstation, to obtain the ion conductivity.

According to some embodiments of the present disclosure, an average particle size of the solid-state electrolyte material may range from 0.5 µm to 20 µm, for example, the average particle size of the solid-state electrolyte material may be 0.5 µm, 1 µm, 5 µm, 10 µm, 15 µm, or 20 µm, etc., or a range in composed of any of the above-described numerical values. Thus, the solid-state electrolyte material can achieve a good balance between favorable dispersibility and high ionic conductivity. According to some specific embodiments of the present disclosure, the average particle size of the solid-state electrolyte material may range from 0.5 µm to 0.9 µm.

In the present disclosure, the average particle size of the solid-state electrolyte material is measured by: dispersing the solid-state electrolyte material in an aqueous solvent and testing its particle size distribution using a laser particle size analyzer.

According to some embodiments of the present disclosure, a pH value of the solid-state electrolyte material ranges from 6 to 10 at 25°C, for example, the pH value of the solid-state electrolyte material may be 6, 7, 8, 9, or 10 etc., or a range composed of any of the above-described numerical values. Therefore, by keeping the pH value within the above-described range, the structural stability of the solid-state electrolyte material is improved, and an influence of structural instability on the ionic conductivity is reduced. Also, sufficient lithium is contained in the solid-state electrolyte material to improve purity and the ionic conductivity of the solid-state electrolyte material.

According to some embodiments of the present disclosure, the surface of the solid-state electrolyte material includes residual lithium. The residual lithium includes at least one of dilithium hydrogen phosphate, lithium dihydrogen phosphate, lithium carbonate, or lithium pyrophosphate. Based on a total mass of the solid-state electrolyte material, a mass proportion of the dilithium hydrogen phosphate is a, a mass proportion of the lithium dihydrogen phosphate is b, a mass proportion of the lithium carbonate is c, and a mass proportion of the lithium pyrophosphate is d, satisfying: 0≤a≤0.5%, 0≤ b≤ 0.1%, 0≤c≤ 0.3%, and 0≤d≤0.2%. Thus, by testing the types of the residual lithium, it can be inferred that composition of a product must contain the pyrophosphate ion. By keeping a content of the residual lithium within the above-described range, the probability of continuous lithium precipitation from the interior to the surface of the solid-state electrolyte materials is reduced, and the structural stability of the solid-state electrolyte material is improved.

As an example, 0≤a≤0.5%, for example, a may be 0, 0.1%, 0.2%, 0.3%, 0.4%, or 0.5%, etc., or a range composed of any of the above-described numerical values.

As an example, 0≤b≤0.1%, for example, b may be 0, 0.02%, 0.04%, 0.06%, 0.08%, or 0.1%, etc., or a range composed of any one of the above-described numerical values.

As an example, 0≤c≤0.3%, for example, c may be 0, 0.05%, 0.1%, 0.15%, 0.2%, 0.25%, or 0.3%, etc., or a range composed of any of the above-described numerical values.

As an example, 0≤d≤0.2%, for example, d may be 0, 0.05%, 0.1%, 0.15%, or 0.2%, etc., or a range composed of any of the above-described numerical values.

In the present disclosure, the type and content of the residual lithium are measured as follows. 5.0000 g of a to-be-tested sample is accurately weighed into a 150.0 mL beaker, and the mass of the sample is recorded as mₛₐₘₚₗₑ. 100.0 g of pure water and a stirring magnet are added to the beaker containing the to-be tested sample, the beaker is sealed with plastic wrap, and placed on a magnetic stirrer for stirring, and the sample solution fron the above step is suction-filtered using a dry suction filtration device to obtain a filtrate. In a 100.0 mL beaker, a stirring magnet is added, 60.0000g of the filtrate is accurately weighed for titration, and the mass is recorded as m_{filtrate}. The filtrate is titrated to the end-point with a 0.1000 mol/L standard hydrochloric acid solution. At the end of the test, when the number of inflection points is 2, volumes V_{forward1} and V_{forward2} corresponding to inflection points EP₁ and EP₁ are recorded. At the end of the test, when the number of the inflection points is 3, volumes V_{forward1}, V_{forward2}, and V_{forward3} corresponding to the infection points EP₁, EP₂, and EP₃ are recorded. The above titrated solution is titrated to the end-point with a 0.1000 mol/L standard sodium hydroxide solution, and volumes Vᵣₑᵥₑᵣₛₑ₁, Vᵣₑᵥₑᵣₛₑ₂, and Vᵣₑᵥₑᵣₛₑ₃ corresponding to the inflection points EP₁ and EP₂ are recorded. Based on the results of a forward titration and a reverse titration, the corresponding types and contents of the residual lithium are calculated in conjunction with Table 1.

**Table 1**

| Number of inflection points in the forward titration | Determinatio n conditions | Existing form of a substance | Lithium carbonate | Lithium phosphate | Lithium pyrophosphate |
|---|---|---|---|---|---|
| 2 | n(HCl)>n(N aOH) | Lithium carbonate and lithium phosphate | Li₂CO₃=((V_{forward2}-V_{forward1})/1000×C( HCl)-((Vᵣₑᵥₑᵣₛₑ₂-Vᵣₑᵥₑᵣₛₑ₁)×C(NaOH) × M(Li₂CO₃)/m_{filtrat e}*m_{water}/mₛₐₘₚₗₑ | Li₃PO₄₌((V_{reverse 2}-Vᵣₑᵥₑᵣₛₑ₁)1000× C(NaOH)×M(Li 3PO₄)/m_{filtrate}*m _{water}/mₛₐₘₚₗₑ | 0% |
| | n(HCl)=n(N aOH) | lithium phosphate | 0% | Li₃PO₄=((V_{revers e2}-Vᵣₑᵥₑᵣₛₑ₁₎/1000× C(NaOH)×M(Li ₃PO₄)/m_{filtrate}*m _{water}/mₛₐₘₚₗₑ | 0% |
| | n(HCl)<n(N aOH) | Lithium phosphate and lithium pyrophosphate, with the lithium pyrophosphate being in a smaller content (trace amounts of lithium carbonate is present, which is ignored for calculation purpose) | 0% | Li₂PO₄=(2(V_{forw ard2}-V_{forward1})/1000× C(HCl)-(Vᵣₑᵥₑᵣₛₑ₂-Vᵣₑᵥₑᵣₛₑ₁)/1000× C(NaOH))×M( Li₃PO₄)/m_{filtrate}* M_{water}/Mₛₐₘₚₗₑ | Li₄P₂O₇=((V_{rever se2}-Vᵣₑᵥₑᵣₛₑ₁)/1000× C(NaOH)-(V_{forward2}-V_{forward1})/1000× C(HCl))*M(Li₄ P₂O₇)/m_{filtrate}*m _{water}/mₛₐₘₚₗₑ |
| 3 | | Lithium phosphate and lithium pyrophosphate, with the lithium pyrophosphate being in a higher content | 0% | Li₃PO₄=((V_{revers e2}-Vᵣₑᵥₑᵣₛₑ₁) C(NaOH)-2(V_{forward2}-V_{forward1})*C(HC l))*M(Li₃PO₄) | Li₄P₂O₇=(V_{forwa rd2}-V_{forward1})*C(HC l)*M(Li₄P₂O₇) |

**Table 2**

| | | | |
|---|---|---|---|
| pH | X(PO₄³⁻) | X(HPO₄²⁻) | X(H₂PO₄⁻) |
| >10 | =Kₐ₁*Kₐ₂*Kₐ₃/([H⁺]^3+[H⁺]^2*kₐ₁+[H⁺]*Kₐ₁* Kₐ₂+Kₐ₁*Kₐ₂*Kₐ₃) | =1-X(PO₄³⁻) | 0 |
| <10 | | =[H⁺]*Kₐ₁*Kₐ₂/([H ⁺]^3+[H⁺]^2*kₐ₁+[ H+]*Kₐ₁*Kₐ₂+Kₐ₁* Kₐ₂*Kₐ₃) | =1-X(HPO₄²⁻) |

A second aspect of the present disclosure provides a method for preparing the solid-state electrolyte material provided in the first aspect. The method includes: mixing an M² source, an M³ source, a PO₄³⁻source, a precipitant, and a solvent; co-precipitating; and filtering to obtain a first precursor; mixing the first precursor, an M¹ source, and an R source, and performing a first sintering in an oxygen-containing atmosphere to obtain a second precursor; and mixing the second precursor, a Li source, and a P₂O₇⁴⁻ source, and performing a second sintering in an oxygen-free atmosphere to obtain the solid-state electrolyte material. Thus, the solid-state electrolyte material prepared by this method has all the characteristics and advantages of the above-described solid-state electrolyte material, which will not be reiterated here. Generally speaking, the solid-state electrolyte material prepared by this method has at least the advantages of high ionic conductivity and good structural stability.

The method is described in detail below. With reference to FIG. 1, the method includes the following steps. S100: the first precursor is obtained by mixing the M² source, the M³ source, and the PO₄³⁻source.

According to some embodiments of the present disclosure, the first precursor is obtained by: mixing the M² source, the M³source, the PO₄³⁻ source, the precipitant, and the solvent; co-precipitating; and filtering.

According to some embodiments of the present disclosure, the first precursor is obtained by: mixing the M² source, the M³ source, the PO₄³⁻ source, a surfactant, the precipitant, and the solvent; co-precipitating; and filtering. Thus, by adding the surfactant, formation energy of a dominant crystal plane can be reduced, and a proportion of the dominant crystal plane corresponding to the transport channels for the lithium ions is increased. As a result, the transport rate of the lithium ions is improved, and ultimately the ionic conductivity of the solid-state electrolyte material is improved.

According to some embodiments of the present disclosure, based on a total mass of the PO₄³⁻source, a mass proportion of the surfactant may be greater than or equal to 0.1%, for example, the mass proportion of the surfactant may be 0.1%, 0.3%, 0.5%, 0.7%, 0.9%, 1%, 1.5%, or 2% etc, or a range composed of any of the above-described numerical values. Thus, by keeping the mass proportion of the surfactant within the above-described range, the proportion of the dominant crystal plane can be increased, and the transport rate of the lithium ions can be improved. As a result, the ionic conductivity of the solid-state electrolyte material can be improved. According to some specific embodiments of the present disclosure, based on the total mass of the PO₄³⁻source, the mass proportion of the surfactant may range from 0.1% to 1%. According to other specific embodiments of the present disclosure, based on the total mass of the PO₄³⁻source, the mass proportion of the surfactant may range from 0.3% to 0.7%.

According to some embodiments of the present disclosure, the surfactant includes at least one of polyvinyl pyrrolidone, sodium dodecylbenzene sulfonate, or sulfonate. Thus, by selecting the above types of the surfactant, the formation energy of dominant crystal plane corresponding to the transport channels for the lithium ions can be reduced, and the proportion of the dominant crystal plane can be increased. As a result, the transport rate of the lithium ions is improved, and ultimately the ionic conductivity of the solid-state electrolyte material is improved.

According to some embodiments of the present disclosure, the M² source includes at least one of phosphate containing M², acetate containing M², sulfate containing M², chloride containing M², nitrate containing M², or carbonate containing M².

According to some embodiments of the present disclosure, the M³ source includes at least one of phosphate containing M³, acetate containing M³, sulfate containing M³, chloride containing M³, nitrate containing M³, or carbonate containing M³.

According to some embodiments of the present disclosure, the PO₄³⁻ source includes at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄.

According to some embodiments of the present disclosure, the precipitant includes at least one of sodium hydroxide, sodium carbonate, or ammonia water.

According to some embodiments of the present disclosure, the solvent includes at least one of pure water, alcohols, or ethers.

S200: the first precursor and the R source are mixed, and the first sintering is performed to obtain the second precursor.

According to some embodiments of the present disclosure, the first precursor and the R source are mixed, and the first sintering is performed in the oxygen-containing atmosphere to obtain the second precursor.

According to some embodiments of the present disclosure, the oxygen-containing atmosphere includes oxygen or air.

According to some embodiments of the present disclosure, a temperature of the first sintering ranges from 700°C to 900°C, and a duration of the first sintering ranges from 4 hours to 10 hours.

As an example, the temperature of the first sintering may be 700°C, 750°C, 800°C, 850°C, or 900°C, or a range composed of any of the above-described numerical values.

As an example, the duration of the first sintering may range from 4 hours to 10 hours, for example, the duration of the first sintering may be 4 hours, 6 hours, 8 hours, or 10 hours, etc., or a range composed of any of the above-described numerical values.

Thus, by keeping the temperature and the duration of the first sintering within the above-described range, a phosphate-heteropolyacid composite precursor with high purity and stable structure can be formed, and particles are kept within a limited range, maintaining a high ionic conductivity.

According to some embodiments of the present disclosure, the M¹ source includes at least one of oxide containing M¹, phosphate containing M¹, sulfate containing M¹, chloride containing M¹, nitrate containing M¹, or carbonate containing M¹.

According to some embodiments of the present disclosure, the R source includes at least one of elemental R, oxide containing R, or hydride containing R.

S300: the second precursor, the Li source, the M¹ source, and the P₂O₇⁴⁻ source are mixed, and the second sintering is performed in the oxygen-free atmosphere.

According to some embodiments of the present disclosure, the second precursor, the Li source, the M¹ source, and the P₂O₇⁴⁻ source are mixed, and the second sintering is performed in the oxygen-free atmosphere.

According to some embodiments of the present disclosure, a temperature of the second sintering may range from 450°C to 700°C, and a duration of the second sintering may range from 8 hours to 20 hours.

As an example, the temperature of the second sintering may be 450°C, 500°C, 550°C, 600°C, 650°C, or 700°C etc., or a range composed of any of the above-described numerical values.

As an example, the duration of the second sintering may range from 8 hours to 20 hours, for example, the duration of the second sintering may be 8 hours, 10 hours, 12 hours, 14 hours, 16 hours, 18 hours, or 20 hours, etc., or a range composed of any of the above-described numerical values.

Thus, by keeping the temperature and the duration of the second sintering within the above-described range, the formation of a phosphate-heteropolyacid-pyrophosphate composite phase with high purity and stable structure can be ensured, and particles are kept within a limited range, maintaining a high ionic conductivity.

According to some embodiments of the present disclosure, the oxygen-free atmosphere includes an inert gas or nitrogen. Thus, by performing the second sintering in the oxygen-free atmosphere, probability of the pyrophosphate ion being converted into the phosphate ion can be reduced, and a content of the pyrophosphate ion in the solid-state electrolyte material can be increased.

According to some embodiments of the present disclosure, the P₂O₇⁴⁻ source includes at least one of H₄P₂O₇, (NH₄)₂H₂P₂O₇, Li₂H₂P₂O₇, or Li₄P₂O₇.

According to some embodiments of the present disclosure, the Li source includes at least one of lithium carbonate, lithium hydroxide, or lithium nitrate.

According to some embodiments of the present disclosure, the method may further include performing a nanonization treatment on the solid-state electrolyte material.

As an example, the nanonization treatment may be performed on the solid-state electrolyte material through ball milling.

According to some embodiments of the present disclosure, the nanonization treatment may include: mixing the solid-state electrolyte material with the solvent to form a slurry, and performing sand milling, drying, and dissociation to obtain a nano-scale solid-state electrolyte material.

As an example, a mass proportion of the solid-state electrolyte material in the slurry may range from 10% to 70%, for example, the mass proportion of the solid-state electrolyte material in the slurry may be 10%, 20%, 30%, 40%, 50%, 60% or 70%, etc., or a range composed of any of the above-described numerical values. According to some specific embodiments of the present disclosure, the mass proportion of the solid-state electrolyte material in the slurry may range from 30% to 60%.

According to some embodiments of the present disclosure, a temperature of the drying may range from 80°C to 400°C. For example, the temperature of the drying may be 80°C, 100°C, 150°C, 200°C, 250°C, 300°C, 350°C or 400°C, or a range composed of any of the above-described numerical values. According to some embodiments of the present disclosure, the first drying.

According to some embodiments of the present disclosure, a duration of the drying may range from 0.1 hour to 10 hours, for example, the duration of the drying may be 0.1 hour, 1 hour, 3 hours, 5 hours, 7 hours, 9 hours, or 10 hours, etc., or a range composed of any of the above-described numerical values. According to some embodiments of the present disclosure, the duration of the drying may range from 0.5 hour to 3 hours.

According to some embodiments of the present disclosure, a drying device may include at least one of a spray dryer, a fluidized bed dryer, a belt dryer, or a flash dryer.

According to some embodiments of the present disclosure, an average particle size of the solid-state electrolyte material after nanonization treatment may be less than or equal to 200 nm. In an exemplary embodiment of the present disclosure, the average particle size may range from 5 nm to 100 nm.

According to some embodiments of the present disclosure, a device for dissociation may include at least one of a jet mill, a mechanical mill, and a colloid mill.

A third aspect of the present disclosure provides a cathode active material including the solid-state electrolyte material provided in the first aspect of the present disclosure or the solid-state electrolyte material prepared by the method provided in the second aspect of the present disclosure.

According to some embodiments of the present disclosure, the cathode active material includes a matrix. At least part of a surface of the matrix has a coating layer. The coating layer includes the solid-state electrolyte material. Thus, by forming the solid-state electrolyte material on at least part of the surface of the matrix, an ionic conductivity of the cathode active material can be improved due to the high ionic conductivity of the solid-state electrolyte material. As a result, the rate performance of the battery is improved.

According to some embodiments of the present disclosure, based on a total mass of the matrix, the mass proportion of the solid-state electrolyte material may range from 0.05% to 1%, for example, the mass proportion of the solid-state electrolyte material may be 0.05%, 0.1%, 0.2%, 0.3%, 0.4%, 0.5%, 0.6%, 0.7%, 0.8%, 0.9%, or 1%, etc., or a range composed of any of the above-described numerical values. Thus, by keeping the content of the solid-state electrolyte material within the above-described range, the ionic conductivity of the cathode active material can be improved, and the rate performance of the battery can be further improved.

A fourth aspect of the present disclosure provides a cathode plate including the cathode active material provided in the third aspect of the present disclosure.

A fifth aspect of the present disclosure provides a solid-state battery including the cathode plate provided in the fourth aspect of the present disclosure.

A sixth aspect of the present disclosure provides an electrical device including the solid-state battery provided in the fifth aspect of the present disclosure.

### Example 1

Aluminum nitrate, titanium oxysulfate, and disodium hydrogen phosphate were mixed in pure water at a molar ratio of Al³⁺:Ti⁴⁺:PO₄³⁻=0.3:1.7:1.5. A polyvinylpyrrolidone (PVP) surfactant was added, with a mass proportion of the PVP being 0.5% based on a total mass of the disodium hydrogen phosphate. The mixture was heated to 60°C and stirred for 30 minutes, and a uniform precipitate was formed. After filtration and drying, powder of the first precursor was obtained.

The first precursor and silicon dioxide were weighed at a ratio of Si⁴⁺: PO₄³⁻=1:1.5 and mixed uniformly in a high-speed mixer. After sintering for 6 hours at 800°C in an air atmosphere, powder of the second precursor was obtained.

The second precursor, lithium carbonate, potassium carbonate, and titanium pyrophosphate were weighed at a ratio of Li⁺: K⁺: P₂O₇⁴⁻: PO₄³⁻=0.6:0.2:0.5:1.5 and mixed uniformly in a high-speed mixer. After sintering for 12 hours at 550°C in a nitrogen atmosphere, a micron-scale composite oxide solid-state electrolyte material was obtained.

The obtained micron-scale composite oxide solid-state electrolyte material was added to pure water to prepare a slurry with a solid-state content of 50%, and milled with zirconium oxide balls in a ball mill for 6 hours to obtain a nano-slurry with an average particle size being less than 200 nm. The slurry was treated with a spray dryer to obtain powder. The powder was dissociated and sieved to finally obtain a solid-state electrolyte nano-powder with a relatively uniform particle size distribution and a composition of Li_{0.6}K_{0.2}Al_{0.3}Ti_{1.7}(SiO₃)(P₂O₇)_{0.5}(PO₄)_{1.5}.

Preparation methods of Example 2 to Example 11, Comparative Example 2, Comparative Example 3, and Comparative Example 4 were the same as that of Example 1, and differences were detailed in Table 1.

### Example 12

The preparation method was the same as that of Example 1, except that K element was not doped

### Example 13

The preparation method was the same as that of Example 1, except that K element was not doped, and the first precursor, silicon dioxide, and molybdenum trioxide were weighed at a ratio of Si⁴⁺: PO₄³⁻:Mo⁶⁺=0.5:1:0.5 and mixed uniformly in a high-speed mixer.

### Example 14

The preparation method was the same as that of Example 1, except that: the doped M¹ element was Na; the M¹ source was sodium carbonate; and in a preparation process, the M¹ source, the M² source, the M³ source, the PO₄³⁻ source, the P₂O₇⁴⁻ source, the R source, and the lithium source were weighed based on the proportion of each element in the chemical formula.

### Example 15

The preparation method was the same as that of Example 1, except that: the doped M² element was Y; the M² source was yttrium oxide; and in a preparation process, the M¹ source, the M² source, the M³ source, the PO₄³⁻ source, the P₂O₇⁴⁻ source, the R source, and the lithium source were weighed based on the proportion of each element in the chemical formula.

### Example 16

The preparation method was the same as that of Example 1, except that: the doped M³ element was Zr; the M² source was zirconium oxide; and in a preparation process, the M¹ source, the M² source, the M³ source, the PO₄³⁻source, the P₂O₇⁴⁻ source, the R source, and the lithium source were weighed based on the proportion of each element in the chemical formula.

### Example 17

The preparation method was the same as that of Example 1, except that: the R source was molybdenum oxide; and in a preparation process, the M¹ source, the M² source, the M³ source, the PO₄³⁻ source, the P₂O₇⁴⁻source, the R source, and the lithium source were weighed based on the proportion of each element in the chemical formula.

### Comparative example 1

(1) Compounds Li₂CO₃, MgCO₃, Al₂O₃, TiO₂, ZrO₂, and NH₄H₂PO₄ were weighed based on a stoichiometric ratio, mixed with a certain amount of pure water, and then mixed and crushed in a ball milling device to obtain a mixed slurry A with a solid-state content of 50%. 55 wt % of acrylamide (monomer), (NH₄)₂S₂O₈ (initiator) and TEMED (catalyst) were added to the mixed slurry A and dispersed uniformly in a stirring device to obtain a mixed slurry B.
(2) The mixed slurry B was poured into a sagger container, dried in a blast oven at 100°C, and the polymerization reaction of the substances in the mixed slurry B was initiated. After 12 hours, a block-shaped solid-state electrolyte precursor A was obtained.
(3) The solid-state electrolyte precursor A obtained in step (2) was pre-sintered at 550°C in a muffle furnace for 2 hours, and the sintered product was crushed in a blender at a highest speed for 5 minutes to obtain a powdered solid-state electrolyte precursor B.
(4) The solid-state electrolyte precursor B obtained in step (3) was sintered at 800°C in a muffle furnace for 6 hours, and the sintered product was crushed in a jet mill to obtain a powdered, micron-scale solid-state electrolyte Li_{1.2}Mg_{0.05}Al_{0.3}Zr_{0.05}Ti_{1.65}(PO₄)₃
(5) The solid-state electrolyte Li_{1.2}Mg_{0.05}Al_{0.3}Zr_{0.05}Ti_{1.65}(PO₄)₃ obtained in step (4) was mixed with pure water and sand-milled at 1000 rpm for 2 hours in a sand mill to obtain a nano-scale slurry with a solid-state content of 50%. The slurry was freeze-dried and powder obtained after drying was further dissociated by a jet mill to obtain a powdered, nano-scale solid-state electrolyte material Li_{1.2}Mg_{0.05}Al_{0.3}Zr_{0.05}Ti_{1.65}(PO₄)₃.

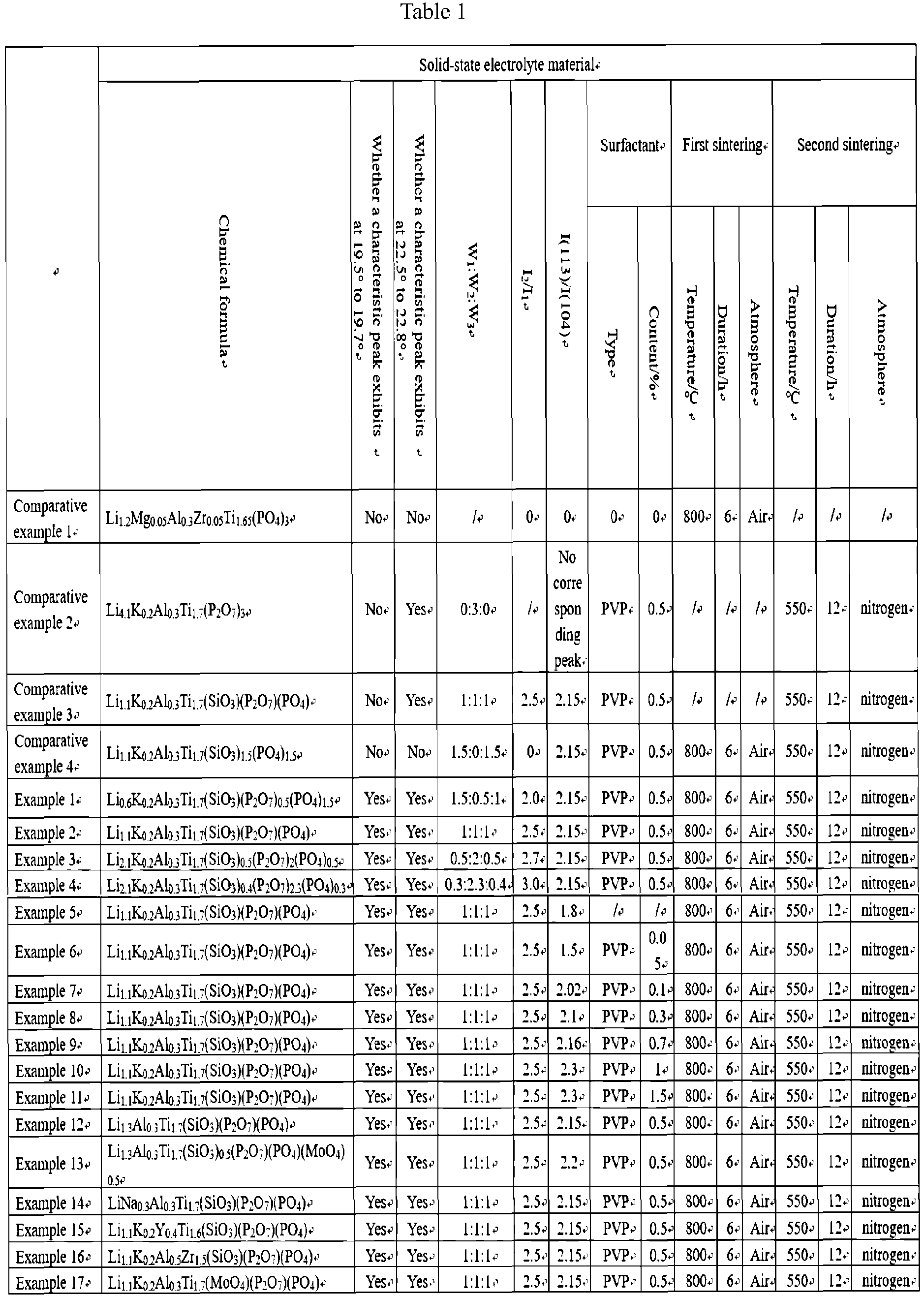

A method for preparing a button cell was as follows. A cathode material NCM811 (LiNi_{0.8}Co_{0.1}Mn_{0.1}O₂), a solid-state electrolyte, acetylene black, and polyvinylidene fluoride (PVDF) were mixed at a mass ratio of 90:2:3:5. The mixture was coated on an aluminum foil, dried, and pressed into a cathode plate with a diameter of 12 mm and a thickness of 120 µm under a pressure of 100 MPa. Subsequently, the cathode plate was placed in a vacuum drying oven and dried at 120°C for 12 hours. For an anode, a Li metal sheet with a diameter of 17 mm and a thickness of 1 mm was used. For a separator, a Celgard 2400 porous membrane with a thickness of 25 µm was used. For an electrolyte solution, a mixture of equal amounts of 1 mol/L LiPF₆, ethylene carbonate (EC), and diethyl carbonate (DEC) was used. The cathode plate, the separator, the anode plate, and 4 µL of electrolyte solution were assembled into a 2025-type button cell in an argon (Ar) glove box with both water content and oxygen content less than 5 ppm.

### Performance test methods

### 1. Test method for the ionic conductivity of the solid-state electrolyte material

The test method for the ionic conductivity was as follows. 5 mg of nano-powder of the solid-state electrolyte material was pressed into a sheet sample in a steel mold with a diameter of 12 mm under a pressure of 200 MPa. Subsequently, the formed sheet sample was placed in a fixture, and an alternating current impedance test was performed on an electrochemical workstation to obtain the ionic conductivity.

### 2. Test method for the structural stability of the solid-state electrolyte

5 g of solid-state electrolyte material powder was placed in a beaker of 95 g of pure water, stirred, heated to 100°C, and kept warm for 5 minutes. Subsequently, the beaker was naturally cooled to a room temperature and filtering was performed. The filtrate was titrated with a standard hydrochloric acid solution to obtain a lithium content in the filtrate.

### 3. X-ray diffraction, XRD test method

The X-ray diffraction test method was as follows. Phase and crystal structure analysis was performed using an automatic X-ray diffractometer with an operating voltage of 40 kV, an operating current of 250 mA, continuous scanning adopted, a scanning speed of 4°/min, a step size of 0.02°, and a scanning angle ranging from 10° to 80°.

### 4. Test method for the rate performance of the battery

The assembled batteries were subjected to rate performance testing at 0.1C and 1C rates, and a ratio of the capacity at 1C rate to the capacity at 0.1C rate was calculated.

### 5. Test method for battery interface impedance

The assembled batteries were tested in an alternating current impedance mode on an electrochemical workstation.

Test results of the batteries in Example 1 to Example 17 and Comparative Example 1 to Comparative Example 4 were shown in Table 2.

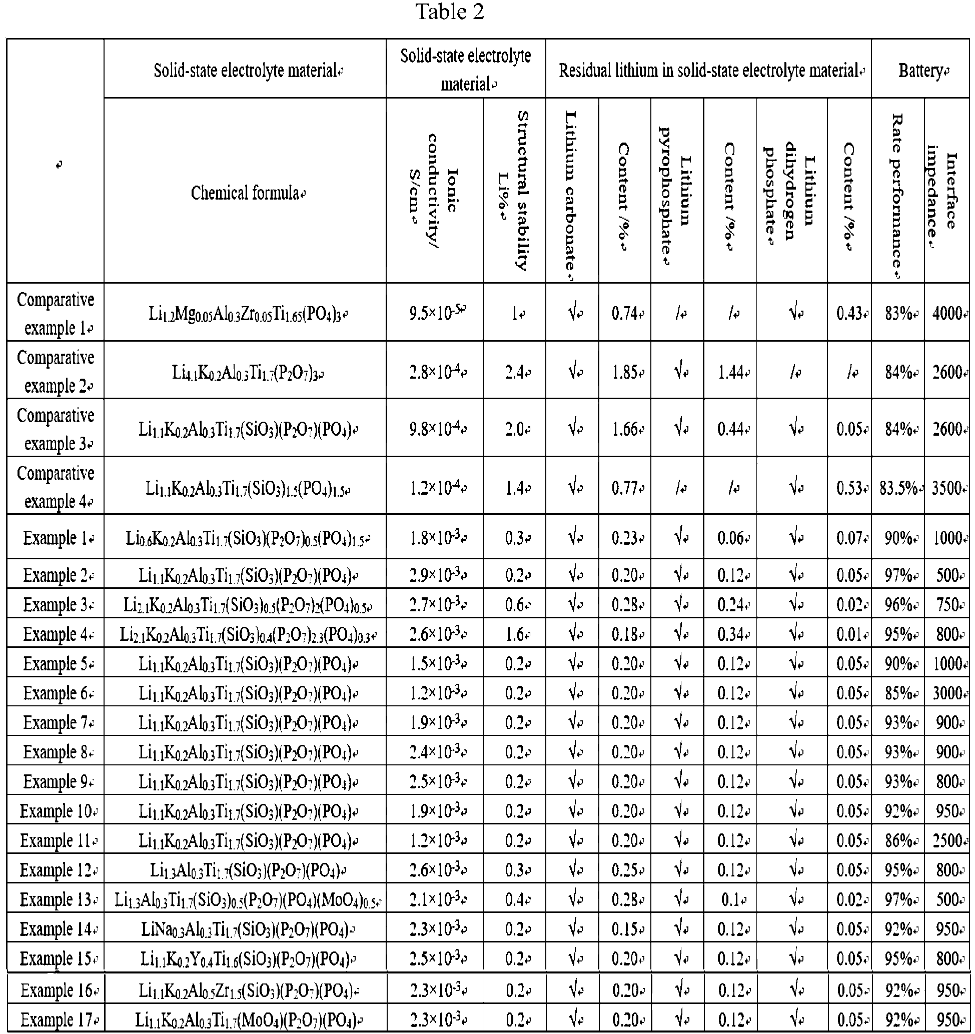

Conclusions are as follows. Comparison of Example 1 to Example 17 with Comparative Example 1 to Comparative Example 4 shows that the solid-state electrolyte material provided in the present disclosure exhibits characteristics of relatively high ionic conductivity and relatively low Li content in the filtrate, and the batteries containing the solid-state electrolyte material provided in the present disclosure have superior rate performance and low interface impedance. It is indicated that, by using the phosphate ion, the pyrophosphate ion, and the heteropolyacid as the framework of the solid-state electrolyte material, a migration rate of the charge carrier can be increased. During migration of the charge carrier, the probability of the phase transition in the crystal structure can be reduced. As a result, the structural stability of the solid-state electrolyte material is improved, and the intrinsic ionic conductivity of the solid-state electrolyte material is improved.

It can be seen from Example 1 to Example 4 that by adding different amounts of pyrophosphate ion to the solid-state electrolyte material, the migration rate of the charge carrier can be improved, and the ionic conductivity of the solid-state electrolyte material can be improved.

By comparing Example 5 with Example 1 to Example 4, and Example 6 to Example 17, it can be seen that, in a process of preparing the solid-state electrolyte material, the content of the dominant crystal plane 113 can be increased by adding the surfactant. As a result, the transport rate of the lithium ions is improved, and the ionic conductivity of the solid-state electrolyte is improved.

It can be seen from Example 6 to Example 11 that, in a process of preparing the solid-state electrolyte material, by adding the surfactants with different amounts, the content of the dominant crystal plane 113 in the solid-state electrolyte material can be adjusted. As a result, the transport rate of the lithium ions is improved, and the ionic conductivity of the solid-state electrolyte is improved.

By comparing Example 1 to Example 17 with Comparative Example 3, it can be seen that, by adopting a two-step sintering process, a solid-state electrolyte material having both the hexagonal crystal system and the monoclinic crystal system can be formed. During the transport of the lithium ions, the binding to the lithium ions by anions can be weakened. As a result, t the ionic conductivity of the solid-state electrolyte material is improved.

It can be seen from Example 13 to Example 17 that, different types of M¹elements, M² elements, and M³ elements can be doped into the solid-state electrolyte material.

As illustrated in FIG. 2, characteristic diffraction peaks of the phosphate ion, the pyrophosphate ion, and the silicate ion are exhibited in the XRD pattern, which indicates that the solid-state electrolyte material prepared in Example 3 contains the phosphate ion, the pyrophosphate ion, and the heteropolyacid simultaneously. The ratio of 1(113) to I(104) is greater than 2, therefore, the content of the 113 crystal plane is relatively high, which can increase the transport channels for the lithium ions, and improve the transport rate of the lithium ions. As a result, the ionic conductivity of the solid-state electrolyte is improved.

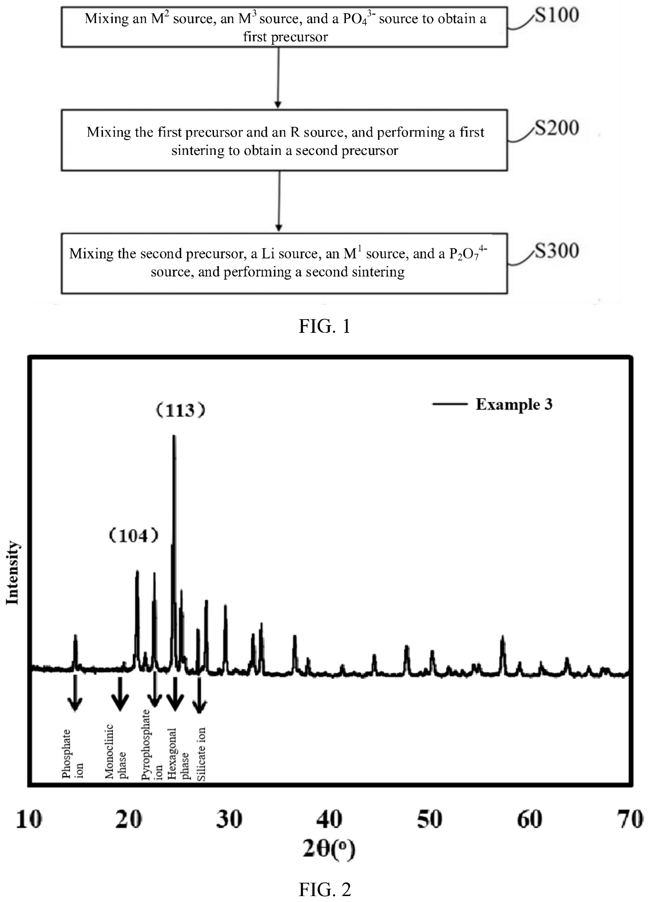

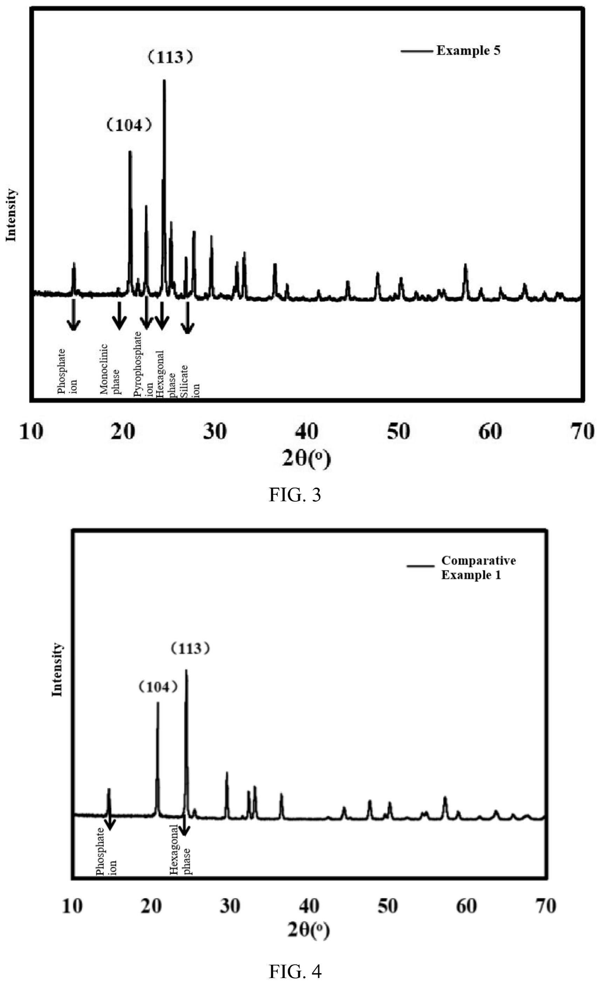

As illustrated in FIG. 3, characteristic diffraction peaks of the phosphate ion, the pyrophosphate ion, and the silicate ion are exhibited in the XRD pattern, which indicates that the solid-state electrolyte material prepared in Example 5 contains the phosphate ion, the pyrophosphate ion, and the heteropolyacid simultaneously. The ratio of I(113) to I(104) is less than 2, therefore, the content of the 113 crystal plane in the solid-state electrolyte material in Example 5 is less than that in Example 3, and there are fewer transport channels for the lithium ions. As a result, the ionic conductivity of the solid-state electrolyte material in Example 5 is lower than that in Example 3.

As illustrated in FIG. 4, only the characteristic diffraction peak of the phosphate ion is exhibited in the XRD pattern, which indicates that the solid-state electrolyte material in Comparative Example 1 only contains the phosphate ion. The ratio of I(113) to I (104) is less than 2. Therefore, the content of the 113 crystal plane in the solid-state electrolyte material in Comparative Example 1 is relatively low, and there are fewer transport channels for the lithium ions. As a result, the ionic conductivity of the solid-state electrolyte is relatively low.

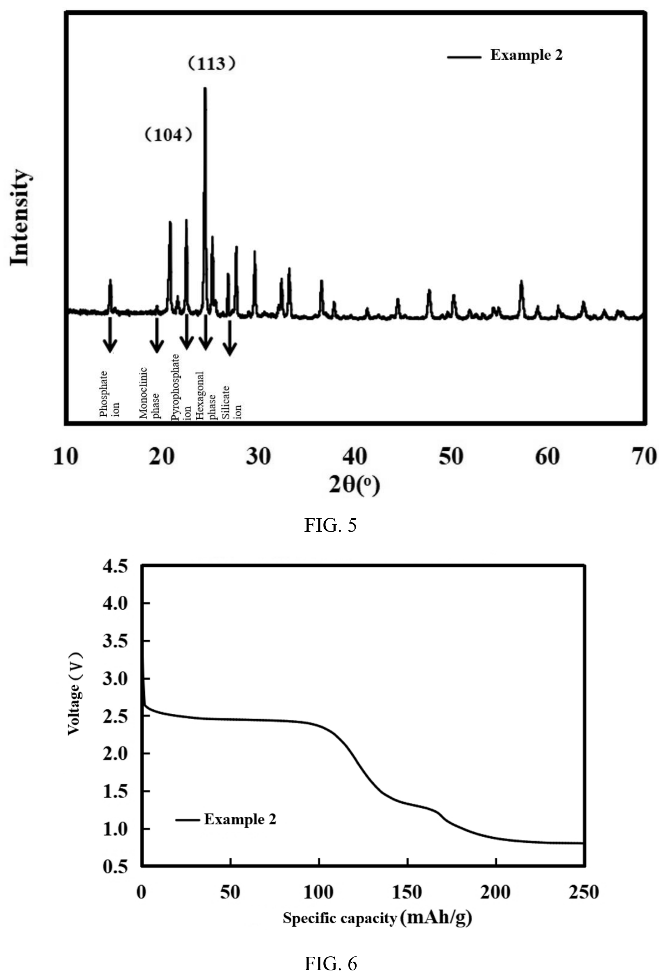

As illustrated in FIG. 5, characteristic diffraction peaks of the phosphate ion, the pyrophosphate ion, and the silicate ion are exhibited in the XRD pattern, which indicates that the solid-state electrolyte material prepared in Example 2 contains the phosphate ion, the pyrophosphate ion, and the heteropolyacid simultaneously. The ratio of 1(113) to 1(104) is greater than 2. Therefore, the content of the 113 crystal plane is relatively high, which can increase the transport channels for the lithium ions, and improve the transmission rate of the lithium ions. As a result, the ionic conductivity of the solid-state electrolyte is improved. Characteristic diffraction peaks of a hexagonal phase and a monoclinic phase are simultaneously exhibited in the XRD pattern, which can weaken the binding to the lithium ions by anions during the transport, and further improve the ionic conductivity of the solid-state electrolyte material

As illustrated in FIG. 6, the solid-state electrolyte material prepared in Example 2 is capable of discharging.

In the present disclosure, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "plurality" means at least two, unless otherwise specifically defined.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The schematic description of the above terms throughout this specification are not necessarily referring to the same embodiment or example. Further, the particular feature, structure, material, or characteristic may be combined in any suitable manner in one or more embodiments or examples. In addition, different embodiments or examples and features of different embodiments or examples described in the specification may be combined by those skilled in the art without mutual contradiction.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

## Claims

1. A solid-state electrolyte material, comprising:
LiₓM¹_{y}M²_{z}M³ᵤ(PO₄)_{w1}(P₂O₇)_{w2}(ROᵥ)_{w3}, where:
M¹ comprises at least one of Mg, Na, or K;
M² comprises at least one of Al, Ga, In, Y, or Sc;
M³ comprises at least one of Ti, Zr, or Ge;
R comprises at least one of Mo, W, Si, Cl, Br, S, Sb, Sn, F, or P; and
0<x≤5, 0≤y≤0.5, 0≤z≤1, 0≤u≤9, 0≤v≤4, 1≤w1≤3, 0<w2≤2.3, 0<w3≤3, and w1+w2+w3=3;
wherein the solid-state electrolyte material has a Na Super Ionic Conductor, NASICON, crystal structure, and
wherein in an X-ray diffraction pattern of the solid-state electrolyte material, the solid-state electrolyte material has a characteristic diffraction peak at a diffraction angle 2θ value of 14.5 °to 14.8 °, a characteristic diffraction peak at a diffraction angle 20 value of 19.5 °to 19.7 °, and a characteristic diffraction peak at a diffraction angle 20 value of 22.5 °to 22.8 °, wherein a ratio of a peak intensity I₁ of the characteristic diffraction peak at the 20 value of 14.5 °to 14.8 ° to a peak intensity I₂ of the characteristic diffraction peak at the 20 value of 22.5 ° to 22.8 ° satisfies: 1.5≤I₂/I₁≤3.

2. The solid-state electrolyte material according to claim 1, satisfying at least one of the following conditions:
M¹ comprises at least one of Mg or K;
M² comprises at least one of Al or Y; or
R comprises at least one of Si, Mo or W.

3. The solid-state electrolyte material according to claim 1 or 2, wherein in the X-ray diffraction pattern of the solid-state electrolyte material, the solid-state electrolyte material further has a characteristic diffraction peak I₃ at a 20 value of 17.8° to 18.0° and/or 23.7° to 23.9 °and/or 26.8 °to 27.0 °.

4. The solid-state electrolyte material according to claim 3, wherein:
a crystal plane in the X-ray diffraction pattern of the solid-state electrolyte material is preferentially oriented along <113>;
a ratio of a peak intensity of a diffraction peak (113) to a peak intensity of a diffraction peak (104) satisfies: I(113)/I(104)≥2;
a 20 value corresponding to the diffraction peak (113) of the X-ray diffraction pattern ranges from 24.3 °to 24.6 °, with a full width at half maximum ranging from 0.170 to 0.172; and
a 20 value corresponding to the diffraction peak (104) ranges from 20.7° to 20.9°, with a full width at half maximum ranging from 0.180 to 0.184.

5. The solid-state electrolyte material according to claim 4, wherein: 2≤I(113)/I(104)≤4.

6. The solid-state electrolyte material according to claim 5, having a charge-discharge plateau at 2.4 V to 2.6 V.

7. The solid-state electrolyte material according to claim 6, satisfying at least one of the following conditions:
an iron conductivity of the solid-state electrolyte material is greater than or equal to 1×10⁻³S/cm;
an average particle size of the solid-state electrolyte material ranges from 0.5 µm to 20 µm;
a pH value of the solid-state electrolyte material ranges from 6 to 10 at 25°C; or
a surface of the solid-state electrolyte material comprises residual lithium, wherein the residual lithium comprises at least one of dilithium hydrogen phosphate, lithium dihydrogen phosphate, lithium carbonate, or lithium pyrophosphate, wherein based on a total mass of the solid-state electrolyte material, a mass proportion of the dilithium hydrogen phosphate is a, a mass proportion of the lithium dihydrogen phosphate is b, a mass proportion of the lithium carbonate is c, and a mass proportion of the lithium pyrophosphate is d, where a, b, c and d satisfy: 0≤a≤0.5%, 0≤ b≤ 0.1%, 0≤c≤ 0.3%, and 0≤d≤0.2%.

8. The solid-state electrolyte material according to claim 7, satisfying at least one of the following conditions:
the iron conductivity of the solid-state electrolyte material is greater than or equal to 2×10⁻³S/cm; or
the average particle size of the solid-state electrolyte material ranges from 0.5 µm to 0.9 µm.

9. A method for preparing the solid-state electrolyte material according to any one of claims 1 to 8, the method comprising:
mixing an M² source, an M³ source, a PO₄³⁻ source, a precipitant, and a solvent, followed by co-precipitating and filtering, to obtain a first precursor;
mixing the first precursor and an R source, followed by performing a first sintering in an oxygen-containing atmosphere, to obtain a second precursor; and
mixing the second precursor, a Li source, an M¹ source, and a P₂O₇⁴⁻ source, followed by performing a second sintering in an oxygen-free atmosphere, to obtain the solid-state electrolyte material.

10. The method according to claim 9, wherein the first precursor is obtained by:
mixing the M² source, the M³ source, the PO₄³⁻ source, a surfactant, the precipitant, and the solvent, and performing co-precipitation and filtering on the mixture.

11. The method according to claim 10, wherein based on a total mass of the PO₄³⁻ source, a mass proportion of the surfactant is greater than or equal to 0.1%.

12. The method according to claim 11, wherein based on the total mass of the PO₄³⁻ source, the mass proportion of the surfactant ranges from 0.1% to 1%.

13. The method according to claim 12, wherein based on the total mass of the PO₄³⁻ source, the mass proportion of the surfactant ranges from 0.3% to 0.7%.

14. The method according to claim 10, wherein the surfactant comprises at least one of polyvinyl pyrrolidone, sodium dodecylbenzene sulfonate, or sulfonate.

15. The method according to claim 9 or 10, satisfying at least one of the following conditions:
the oxygen-containing atmosphere comprises oxygen or air;
a temperature of the first sintering ranges from 700°C to 900°C, and a duration of the first sintering ranges from 4 hours to 10 hours;
the oxygen-free atmosphere comprises an inert gas or nitrogen;
a temperature of the second sintering ranges from 450°C to 700°C, and a duration of the second sintering ranges from 8 hours to 20 hours;
the M¹ source comprises at least one of oxide containing M¹, phosphate containing M¹, sulfate containing M¹, chloride containing M¹, nitrate containing M¹, or carbonate containing M¹.
the M² source comprises at least one of phosphate containing M², acetate containing M², sulfate containing M², chloride containing M², nitrate containing M², or carbonate containing M²;
the M³ source comprises at least one of phosphate containing M³, acetate containing M³, sulfate containing M³, chloride containing M³, nitrate containing M³, or carbonate containing M³.
the PO₄³⁻ source comprises at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄;
the Li source comprises at least one of lithium carbonate, lithium hydroxide, or lithium nitrate;
the P₂O₇⁴⁻ source comprises at least one of H₄P₂O₇, (NH₄)₂H₂P₂O₇, Li₂H₂P₂O₇, or Li₄P₂O₇;
the R source comprises at least one of elemental R, oxide containing R, or hydride containing R; or
the precipitant comprises at least one of sodium hydroxide, sodium carbonate, or ammonia water.

16. A cathode active material, comprising:
the solid-state electrolyte material according to any one of claims 1 to 8; or
the solid-state electrolyte material prepared by the method according to any one of claims 9 to 15.

17. The cathode active material according to claim 16, the cathode active material comprising a matrix, wherein:
at least part of a surface of the matrix has a coating layer comprising the solid-state electrolyte material.

18. The cathode active material according to claim 17, wherein based on a total mass of the matrix, a mass proportion of the solid-state electrolyte material ranges from 0.05% to 1%.

19. A cathode plate, comprising the cathode active material according to any one of claims 16 to 18.

20. A solid-state battery, comprising the cathode plate according to claim 19.

## Amended claims

### Amended claims under Art. 19.1 PCT

1. A solid-state electrolyte material, comprising:
LiₓM¹_{y}M²_{z}M³ᵤ(PO₄)_{w1}(P₂O₇)_{w2}(ROᵥ)_{w3}, where:
M¹ comprises at least one of Mg, Na, or K;
M² comprises at least one of Al, Ga, In, Y, or Sc;
M³ comprises at least one of Ti, Zr, or Ge;
R comprises at least one of Mo, W, Si, Cl, Br, S, Sb, Sn, F, or P; and
0<x≤5, 0≤y≤0.5, 0≤z≤1, 0≤u≤9, 0≤v≤4, 1≤w1≤3, 0<w2≤2.3, 0<w3≤3, and w1+w2+w3=3;
wherein the solid-state electrolyte material has a Na Super Ionic Conductor, NASICON, crystal structure, and
wherein in an X-ray diffraction pattern of the solid-state electrolyte material, the solid-state electrolyte material has a characteristic diffraction peak at a diffraction angle 20 value of 14.5° to 14.8°, a characteristic diffraction peak at a diffraction angle 20 value of 19.5° to 19.7°, and a characteristic diffraction peak at a diffraction angle 20 value of 22.5° to 22.8°, wherein a ratio of a peak intensity I₁ of the characteristic diffraction peak at the 2θ value of 14.5° to 14.8° to a peak intensity I₂ of the characteristic diffraction peak at the 20 value of 22.5° to 22.8° satisfies: 1.5≤I₂/I₁≤3.

2. The solid-state electrolyte material according to claim 1, satisfying at least one of the following conditions:
M¹ comprises at least one of Mg or K;
M² comprises at least one of Al or Y; or
R comprises at least one of Si, Mo or W.

3. The solid-state electrolyte material according to claim 1 or 2, wherein in the X-ray diffraction pattern of the solid-state electrolyte material, the solid-state electrolyte material further has a characteristic diffraction peak I₃ at a 20 value of 17.8° to 18.0° and/or 23.7° to 23.9° and/or 26.8° to 27.0°.

4. The solid-state electrolyte material according to claim 3, wherein:
a crystal plane in the X-ray diffraction pattern of the solid-state electrolyte material is preferentially oriented along <113>;
a ratio of a peak intensity of a diffraction peak (113) to a peak intensity of a diffraction peak (104) satisfies: I(113)/I(104)≥2; preferably, 2≤I(113)/I(104)≤4;
a 2θ value corresponding to the diffraction peak (113) of the X-ray diffraction pattern ranges from 24.3° to 24.6°, with a full width at half maximum ranging from 0.170 to 0.172; and
a 20 value corresponding to the diffraction peak (104) ranges from 20.7° to 20.9°, with a full width at half maximum ranging from 0.180 to 0.184.

5. The solid-state electrolyte material according to claim 4, having a charge-discharge plateau at 2.4 V to 2.6 V.

6. The solid-state electrolyte material according to claim 5, satisfying at least one of the following conditions:
an iron conductivity of the solid-state electrolyte material is greater than or equal to 1×10⁻³S/cm;
an average particle size of the solid-state electrolyte material ranges from 0.5 µm to 20 µm;
a pH value of the solid-state electrolyte material ranges from 6 to 10 at 25°C; or
a surface of the solid-state electrolyte material comprises residual lithium, wherein the residual lithium comprises at least one of dilithium hydrogen phosphate, lithium dihydrogen phosphate, lithium carbonate, or lithium pyrophosphate, wherein based on a total mass of the solid-state electrolyte material, a mass proportion of the dilithium hydrogen phosphate is a, a mass proportion of the lithium dihydrogen phosphate is b, a mass proportion of the lithium carbonate is c, and a mass proportion of the lithium pyrophosphate is d, where a, b, c and d satisfy: 0≤a≤0.5%, 0≤ b≤ 0.1%, 0≤c≤ 0.3%, and 0≤d≤0.2%.

7. The solid-state electrolyte material according to claim 6, satisfying at least one of the following conditions:
the iron conductivity of the solid-state electrolyte material is greater than or equal to 2×10⁻³S/cm; or
the average particle size of the solid-state electrolyte material ranges from 0.5 µm to 0.9 µm.

8. A method for preparing the solid-state electrolyte material according to any one of claims 1 to 7, the method comprising:
mixing an M² source, an M³ source, a PO₄³⁻ source, a precipitant, and a solvent, followed by co-precipitating and filtering, to obtain a first precursor;
mixing the first precursor and an R source, followed by performing a first sintering in an oxygen-containing atmosphere, to obtain a second precursor; and
mixing the second precursor, a Li source, an M¹ source, and a P₂O₇⁴⁻ source, followed by performing a second sintering in an oxygen-free atmosphere, to obtain the solid-state electrolyte material.

9. The method according to claim 8, wherein the first precursor is obtained by:
mixing the M² source, the M³ source, the PO₄³⁻ source, a surfactant, the precipitant, and the solvent, and performing co-precipitation and filtering on the mixture.

10. The method according to claim 9, wherein based on a total mass of the PO₄³⁻ source, a mass proportion of the surfactant is greater than or equal to 0.1%;
preferably, based on the total mass of the PO₄³⁻ source, the mass proportion of the surfactant ranges from 0.1% to 1%; and
more preferably, based on the total mass of the PO₄³⁻ source, the mass proportion of the surfactant ranges from 0.3% to 0.7%.

11. The method according to claim 9, wherein the surfactant comprises at least one of polyvinyl pyrrolidone, sodium dodecylbenzene sulfonate, or sulfonate.

12. The method according to claim 8 or 9, satisfying at least one of the following conditions:
the oxygen-containing atmosphere comprises oxygen or air;
a temperature of the first sintering ranges from 700°C to 900°C, and a duration of the first sintering ranges from 4 hours to 10 hours;
the oxygen-free atmosphere comprises an inert gas or nitrogen;
a temperature of the second sintering ranges from 450°C to 700°C, and a duration of the second sintering ranges from 8 hours to 20 hours;
the M¹ source comprises at least one of oxide containing M¹, phosphate containing M¹, sulfate containing M¹, chloride containing M¹, nitrate containing M¹, or carbonate containing m¹;
the M² source comprises at least one of phosphate containing M², acetate containing M², sulfate containing M², chloride containing M², nitrate containing M², or carbonate containing M².
the M³ source comprises at least one of phosphate containing M³, acetate containing M³, sulfate containing M³, chloride containing M³, nitrate containing M³, or carbonate containing M³;
the PO₄³⁻ source comprises at least one of H₃PO₄, NH₄H₂PO₄, (NH₄)₂HPO₄, (NH₄)₃PO₄, LiH₂PO₄, Li₂HPO₄, Li₃PO₄, NaH₂PO₄, Na₂HPO₄, or Na₃PO₄;
the Li source comprises at least one of lithium carbonate, lithium hydroxide, or lithium nitrate;
the P₂O₇⁴⁻ source comprises at least one of H₄P₂O₇, (NH₄)₂H₂P₂O₇, Li₂H₂P₂O₇, or Li₄P₂O₇;
the R source comprises at least one of elemental R, oxide containing R, or hydride containing R; or
the precipitant comprises at least one of sodium hydroxide, sodium carbonate, or ammonia water.

13. A cathode active material, comprising:
the solid-state electrolyte material according to any one of claims 1 to 7; or
the solid-state electrolyte material prepared by the method according to any one of claims 8 to 12;
optionally, the cathode active material comprising a matrix, wherein:
at least part of a surface of the matrix has a coating layer comprising the solid-state electrolyte material; and
preferably, based on a total mass of the matrix, a mass proportion of the solid-state electrolyte material ranges from 0.05% to 1%.

14. A cathode plate, comprising the cathode active material according to claim 13.

15. A solid-state battery, comprising the cathode plate according to claim 14.
